# EUROPEAN PATENT APPLICATION

(11) **EP 4 835 674 A2**
(43) Date of publication of application: **04.11.2026**
(21) Application number: 26205484.4
(22) Date of filing: 13.12.2024
(51) Int. Cl.: G06F 11/10

(54) **MEMORY SYSTEM AND METHOD OF OPERATING MEMORY SYSTEMS**

(30) Priority: 28.08.2024 US 202463687839 P
(62) Document number(s) of the earlier application(s) in accordance with Art. 76 EPC: 24219693.9 / 4 703 886
(71) Applicant: Kioxia Corporation, Tokyo 108-0023 (JP)
(72) Inventor: Nakatsuka, Hiroyasu, Tokyo, 108-0023 (JP); Rai, Devesh Kumar, Irvine, 92617 (US)
(74) Representative: Marks & Clerk LLP

(57) **Abstract**

According to one embodiment, a storage system connectable with a host (2), comprises:
a plurality of memory systems (3) each including a nonvolatile memory (5) and a controller (7) electrically connected to the nonvolatile memory (5), the plurality of memory systems (3) including at least a first memory system (3-3), a second memory system (3-2), and a third memory system (3-5);
a first controller (7) that is the controller (7) of the first memory system (3-3) is configured to store first data (Old D2) in a first nonvolatile memory (5) that is the nonvolatile memory (5) of the first memory system (3-3);
a second controller (7) that is the controller (7) of the second memory system (3-2) is configured to store second data (Old D1) in a second nonvolatile memory (5) that is the nonvolatile memory (5) of the second memory system (3-2);
a third controller (7) that is the controller (7) of the third memory system (3-5) is configured to:
generate a first parity (Old Q), based on the first data (Old D2) and the second data (Old D1);
store the first parity (Old Q) in a third nonvolatile memory (5) that is the nonvolatile memory (5) of the third memory system (3-5);
receive third data (New D2) from the host (2), the third data (New D2) being updated data of the first data (Old D2);
receive the first data (Old D2) from the first controller (7, 3-3);
read the first parity (Old Q) from the third nonvolatile memory (5, 3-5);
generate a second parity (New Q), based on the first parity (Old Q), the first data (Old D2), and the third data (New D2);
generate first rebuilt data (Rebuild D2(Q)), based on the second parity (New Q), the first parity (Old Q), and the first data (Old D2); and
compare the first rebuilt data (Rebuild D2(Q)) with the third data (New D2) received from the host (2).

## Description

### CROSS-REFERENCE TO RELATED APPLICATIONS

This application claims the benefit of U.S. Provisional Application No. 63/687,839, filed August 28, 2024.

### FIELD

Embodiments described herein relate generally to a memory system and a method of operating memory systems.

### BACKGROUND

In recent years, a memory system and an information processing system have been widely prevalent. The memory system includes a nonvolatile memory. The information processing system includes a host. A solid state drive (SSD) including a NAND flash memory is known as such a memory system. The SSD is used as a main storage of various computing devices.

To improve fault tolerance of the information processing system, a redundant array of inexpensive (or independent) disks (RAID) is often used. The RAID relates to a technology of storing data in a plurality of memory systems to improve redundancy and access performance of stored data. For example, in RAID-5, data and parities for data are dispersed and stored in a plurality of memory systems. An example of the parity is an error correction code (ECC). Therefore, for example, even if a memory system which stores some data fails, the data stored in the failed memory system can be rebuilt using other data and parities stored in other memory systems. Another example of the RAID is RAID-6 which stores two parities for data.

### BRIEF DESCRIPTION OF THE DRAWINGS

FIG. 1 is a diagram illustrating a configuration of an information processing system according to an embodiment.
FIG. 2 is a block diagram illustrating the configuration of a memory system according to the embodiment.
FIG. 3 is a diagram illustrating RAID-6 configured by the memory system according to the embodiment.
FIG. 4 is a flowchart illustrating a processing sequence of partial update according to the embodiment.
FIG. 5 is a flowchart illustrating a processing sequence of full stripe write according to the embodiment.

### DETAILED DESCRIPTION

Embodiments will be described hereinafter with reference to the accompanying drawings. In the following descriptions, a device and a method are illustrated to embody the technical concept of the embodiments. The technical concept is not limited to the configuration, shape, arrangement, material or the like of the structural elements described below. Modifications that could easily be conceived by a person with ordinary skill in the art are naturally included in the scope of the disclosure. To make the descriptions clearer, the drawings may schematically show the size, thickness, planer dimension, shape, and the like of each element differently from those in the actual aspect. The drawings may include elements that differ in dimension and/or ratio. Elements corresponding to each other in the drawings are denoted by the same reference numeral and their redundant descriptions may be omitted. Some elements may be denoted by different names, and these names are merely an example. It should not be denied that one element is denoted by different names. Note that "connection" means that one element is connected to another element via still another element as well as that one element is directly connected to that another element. If the number of elements is not specified as plural, the elements may be singular or plural.

In general, according to one embodiment, a memory system includes an interface circuit communicable with a host and a plurality of external memory systems, a nonvolatile memory, and a controller. The plurality of external memory systems include at least a first memory system and a second memory system. The controller is configured to generate a first parity based on first data stored in the first memory system and second data stored in the second memory system, write the first parity to the nonvolatile memory, receive third data that is updated data of the first data from the host via the interface circuit, receive the first data from the first memory system via the interface circuit, read the first parity from the nonvolatile memory, generate second parity based on the first parity, the first data, and the third data, generate first rebuilt data based on the second parity, the first parity, and the first data, and compare the first rebuilt data with the third data received from the host.

### (Configuration of information processing system)

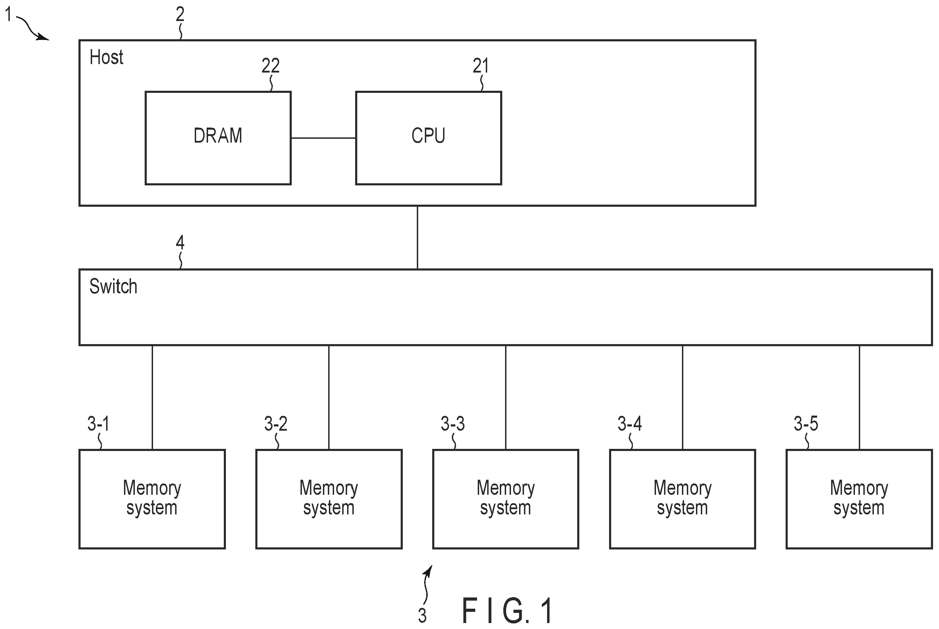

FIG. 1 is a diagram illustrating a configuration of an information processing system 1 according to an embodiment. The information processing system 1 includes a host device 2, a plurality of memory systems 3, and a switch 4.

The host device 2 may be a storage server, a server, or a personal computer which stores a large amount of various types of data in the plurality of memory systems 3. In this specification, the host device 2 is referred to as a host 2.

The plurality of memory systems 3 constitute RAID-5 or RAID-6. RAID-5, storing one parity for data, includes at least three memory systems. RAID-6, storing two parities for data, includes at least four memory systems. In this specification, an embodiment that the plurality of memory systems 3 constitute RAID-6 will be described. FIG. 1 shows a case where the plurality of memory systems 3 are five memory systems 3-1, 3-2, 3-3, 3-4, and 3-5. In this specification, any one of the plurality of memory systems 3 is also referred to as a memory system 3.

The memory system 3 is a semiconductor storage device configured to write data to a nonvolatile memory and to read data from the nonvolatile memory. The memory system 3 is also referred to as a storage device. The memory system 3 may be a solid state drive (SSD). The nonvolatile memory may be a NAND flash memory. The memory system 3 can be used as a storage of the host 2. The memory system 3 may be built in the host 2 or connected to the host 2 via a cable or a network.

The switch 4 is a device which connects the host 2 and the plurality of memory systems 3 to each other. The switch 4 comprises a control circuit (not shown) which controls mutual communication between the host 2 and the plurality of memory systems 3.

An interface for connecting the host 2 and the plurality of memory systems 3 via the switch 4 conforms to standards such as PCI ExpressTM (PCIeTM), NVM ExpressTM (NVMeTM), and the like. In this specification, the switch 4 is also referred to as a PCIe switch 4.

Respective configurations of the host 2 and the memory system 3 will be described below.

### (Configuration of host 2)

The host 2 may comprise a central processing unit (CPU) 21 and a random access memory (RAM) 22.

The CPU 21 is at least one processor. The CPU 21 controls operations of various components of the host 2. The CPU 21 controls communication between the host 2 and the memory system 3. The CPU 21 transmits various commands to the memory system 3. The commands transmitted to the memory system 3 may include read commands and write commands. The host 2 may also include a control circuit or interface (not shown) that controls communication between the host 2 and the memory system 3. The CPU 21 communicates with the memory system 3 via this control circuit.

The RAM 22 is, for example, a volatile memory. The RAM 22 may be a dynamic random access memory (DRAM) or a static random access memory (SRAM). A storage area of the RAM 22 may be allocated as a buffer area where data is temporarily stored. Data to be written to the memory system 3 and data read from the memory system 3 may be stored in the buffer area.

### (Configuration of memory system 3)

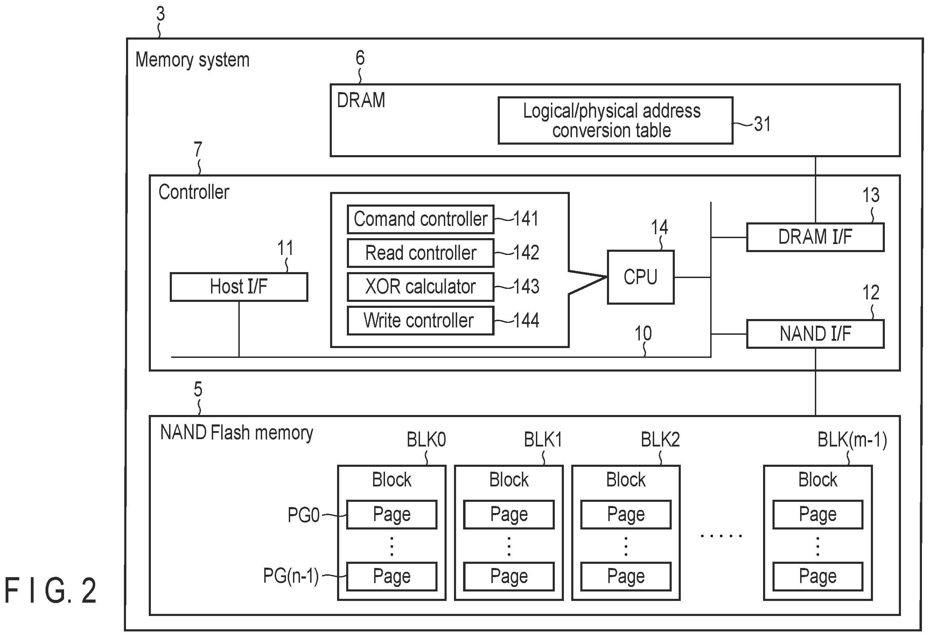

FIG. 2 is a block diagram illustrating the configuration of the memory system 3 of the embodiment.

The memory system 3 may comprise a nonvolatile memory 5, a volatile memory 6, and a controller 7.

The nonvolatile memory 5 may be a NAND flash memory. In this specification, the nonvolatile memory 5 is referred to as a NAND flash memory 5. The volatile memory 6 may be a DRAM or SRAM. In this specification, the volatile memory 6 is referred to as a DRAM 6.

The NAND flash memory 5 includes a plurality of blocks BLK0, BLK1, BLK2..., BLK(m-1). Each of the plurality of blocks BLK0, BLK1, BLK2..., BLK(m-1) includes a plurality of pages PG0..., PG(n-1). In this specification, any one of the plurality of blocks is also referred to as a block BLK. Any one of the plurality of pages is also referred to as a page PG. The block BLK functions as the smallest unit for data erase operation. The block BLK is also referred to as an "erase block" or a "physical block". Each of the plurality of pages PG0..., PG(n-1) includes a plurality of memory cells that are connected in common to a single word line. The page PG functions as a unit for data write operation and data read operation. The word line may also function as a unit for data write operation and data read operation.

A firmware storage area, a cache area for a logical/physical address translation table 31, and a buffer area for temporarily storing data, may be provided in the DRAM 6.

Firmware is a program for controlling the operation of the controller 7. The firmware may be loaded from the NAND flash memory 5 to the DRAM 6 when the memory system 3 is started up.

The logical/physical address translation table 31 manages mapping between each logical address and each physical address of the NAND flash memory 5. The logical address is an address used by the host 2 to address a storage area of the memory system 3. The logical address may be a logical block address (LBA).

The controller 7 functions as a memory controller configured to control the NAND flash memory 5. The controller 7 is configured as, for example, a system-on-a-chip (SoC).

Writing data to one page of the NAND flash memory 5 can be executed only once per program/erase cycle (P/E cycle). For this reason, the controller 7 writes updated data corresponding to a certain logical address, not to a physical storage location where the previous data corresponding to this logical address is stored, but to a different physical storage location. The controller 7 invalidates the previous data by updating the logical/physical address translation table 31 to associate this logical address with the different physical storage location. Data referred from the logical/physical address translation table 31 (i.e., data associated with the logical address) is referred to as valid data. In addition, data that is not associated with any logical addresses is referred to as invalid data. The valid data is data that may be requested to be read by the host 2 later. The invalid data is data that may be no longer requested to be read by the host 2.

The controller 7 may include a host interface circuit (host I/F) 11, a NAND interface circuit (NAND I/F) 12, a DRAM interface circuit (DRAM I/F) 13, and a CPU 14. The host I/F 11, the NAND I/F 12, the DRAM I/F 13, and the CPU 14 may be connected via a bus 10.

The host I/F 11 functions as a circuit that receives various commands and data from the host 2 via the PCIe switch 4. The host I/F 11 may also function as a circuit that receives various commands, data, and responses to commands from another memory system 3 via the PCIe switch 4. The host I/F 11 transfers the received commands, data, and responses to the NAND I/F 12, the DRAM I/F 13, or the CPU 14.

The host I/F 11 also functions as a circuit that transfers data and responses to commands to the host 2 via the PCIe switch 4. The host I/F 11 may also function as a circuit that transfers commands, data, and responses to commands to other memory systems 3 via the PCIe switch 4. The host I/F 11 receives commands, data, and responses to be transmitted, from the NAND I/F 12, DRAM I/F 13, or CPU 14.

The NAND I/F 12 electrically connects the controller 7 with the NAND flash memory 5. The NAND I/F 12 conforms to an interface standard such as Toggle DDR and Open NAND Flash Interface (ONFI).

The NAND I/F 12 functions as a NAND control circuit configured to control the NAND flash memory 5. The NAND I/F 12 may be connected to each of a plurality of memory chips in the NAND flash memory 5 via a plurality of channels. By driving the plurality of memory chips in parallel, the bandwidth of access to the NAND flash memory 5 can be increased.

The DRAM I/F 13 functions as a DRAM control circuit configured to control access to the DRAM 6.

The CPU 14 is a processor configured to control the host I/F 11, the NAND I/F 12, and the DRAM I/F 13. The CPU 14 executes various processes by executing the firmware loaded from the NAND flash memory 5 to the DRAM 6. The firmware is a control program that includes an instruction group for causing the CPU 14 to execute various processes. The CPU 14 can execute command processes for processing various commands from the host 2, and the like. The operations of the CPU 14 are controlled by the firmware executed by the CPU 14.

The functions of each unit in the controller 7 may be implemented by dedicated hardware in the controller 7, or may be implemented by the CPU 14 executing the firmware.

The CPU 14 may function as a command controller 141, a read controller 142, an exclusive OR (XOR) calculator 143, and a write controller 144. The CPU 14 may function as each of these units by executing the firmware.

The command controller 141 accepts commands transmitted from the host 2 or other memory systems 3. The command controller 141 controls the read controller 142, the XOR calculator 143, and the write controller 144, based on the accepted commands.

When receiving a read command, the command controller 141 instructs the read controller 142 to read data from the NAND flash memory 5. When receiving a parity generation command, the command controller 141 instructs the XOR calculator 143 to perform XOR calculation on two or more pieces of data. The result of the XOR calculation on the two or more pieces of data is the parity for the two or more pieces of data. The XOR operation result is hereinafter referred to as a parity.

When receiving a write command, the command controller 141 instructs the write controller 144 to write data to the NAND flash memory 5.

The command controller 141 transfers a response to a command to the host 2 or the other memory system 3 which has transmitted the command. The command controller 141 may also transfer commands and data to the other memory system 3. The command controller 141 may also compare two or more pieces of data.

The read controller 142 reads data from the NAND flash memory 5 in response to the instruction from the command controller 141.

The XOR calculator 143 performs the XOR calculation on two or more pieces of data in response to the instruction from the command controller 141, and generates the parity.

The write controller 144 writes data to the DRAM 6 or the NAND flash memory 5 in response to the instruction from the command controller 141.

### (RAID)

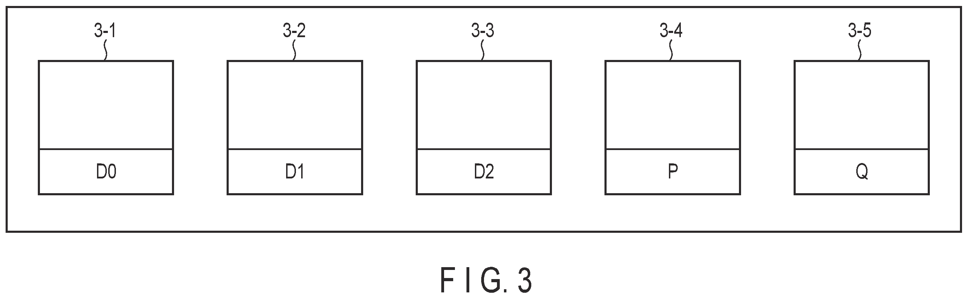

FIG. 3 is a diagram illustrating RAID-6 configured by the memory systems 3 of the embodiment. In RAID-6, a parity is generated for each data of certain size (referred to as stripe data) among the data stored in the plurality of memory systems 3. In RAID-6, two types of parity, P and Q, are generated. In the embodiment shown in FIG. 3, RAID-6 is configured by three memory systems 3-1, 3-2, and 3-3 for storage of the data, a memory system 3-4 for storage of the parity P, and a memory system 3-5 for storage of the parity Q. The memory system 3-1 stores data segment D0. The memory system 3-2 stores data segment D1. The memory system 3-3 stores data segment D2. The host 2 or the memory system 3-4 generates the parity P from the stripe data that includes the data segments D0, D1, and D2 stored in the memory systems 3-1, 3-2, and 3-3, respectively. The memory system 3-4 stores the parity P. The host 2 or the memory system 3-5 generates the parity Q from the stripe data that includes the data segments D0, D1, and D2 stored in the memory systems 3-1, 3-2, and 3-3, respectively. The memory system 3-5 stores the parity Q.

### (Overview of partial update)

The host 2 may write (i.e., overwrite) data with a different value to a logical address range (for example, LBA range) of a certain data segment. This overwriting is referred to as updating the data segment. Updating of part of the data of one stripe data (partial update) stored in a memory system (in this case, data segment D2 stored in the memory system 3-3) among the memory systems constituting RAID-6 will be described. The data segments D0 and D1 are not updated.

When the data segment D2 is updated, the parity P and Q are also updated. To-be-updated parity Old P is represented by Equation 1 using the data segments D0 and D1 and to-be-updated data segment Old D2. $Old P = D 0 ⊕ D 1 ⊕ Old D 2$ Equation 1 where, "⊕" represents the exclusive OR.

Updated parity New P is represented by Equation 2 using the data segments D0 and D1 and updated data segment New D2. $New P = D 0 ⊕ D 1 ⊕ New D 2$ Equation 2

To-be-updated parity Old Q is represented by Equation 3. $Old Q = g 0 ⋅ D 0 ⊕ g 1 ⋅ D 1 ⊕ g 2 ⋅ Old D 2$ Equation 3 where, "·" represents a multiplication in Galois field and g0, g1, and g2 are coefficients.

Updated parity New Q is represented by Equation 4. $New Q = g 0 ⋅ D 0 ⊕ g 1 ⋅ D 1 ⊕ g 2 ⋅ New D 2$ Equation 4

Equation 4 for obtaining the updated parity New Q is transformed in the following manner. $\begin{matrix}New Q \\ = g 0 ⋅ D 0 ⊕ g 1 ⋅ D 1 ⊕ g 2 ⋅ New D 2 \\ = \left(g0⋅D0⊕g1⋅D1\right) ⊕ g 2 ⋅ New D 2 \\ = \left(g0⋅D0⊕g1⋅D1⊕g2⋅Old D2⊕g2⋅Old D2\right) ⊕ g 2 ⋅ New D 2 \\ = \left(g0⋅D0⊕g1⋅D1⊕g2⋅Old D2\right) ⊕ g 2 ⋅ Old D 2 ⊕ g 2 ⋅ New D 2 \\ = 1 ⋅ Old Q ⊕ g 2 ⋅ Old D 2 ⊕ g 2 ⋅ New D 2 \\ = New Q ′ ⊕ g 2 ⋅ New D 2\end{matrix}$ Equation 5 $New Q ′ = 1 ⋅ Old Q ⊕ g 2 ⋅ Old D 2$ Equation 67

In the partial update of the data segment D2, Equation 2 for obtaining the updated parity New P is transformed in the following manner, similarly to Equation 5 and Equation 6. $\begin{matrix}New P \\ = D 0 ⊕ D 1 ⊕ New D 2 \\ = \left(D0⊕D1\right) ⊕ New D 2 \\ = \left(D0⊕D1⊕Old D2⊕Old D2\right) ⊕ New D 2 \\ = \left(D0⊕D1⊕Old D2\right) ⊕ Old D 2 ⊕ New D 2 \\ = Old P ⊕ Old D 2 ⊕ New D 2 \\ = New P ′ ⊕ New D 2\end{matrix}$ Equation 7 $New P ′ = Old P ⊕ Old D 2$ Equation 8

In the partial update of the data segment D2, the updated parity New Q is generated using intermediate data New Q', the updated data segment New D2, and coefficient g2, as represented by Equation 5 and Equation 6. The intermediate data New Q' is calculated from the to-be-updated parity Old Q and the to-be-updated data segment Old D2.

In the partial update of the data segment D2, the updated parity New P is generated using intermediate data New P' and the updated data segment New D2, as represented by Equation 7 and Equation 8. The intermediate data New P' is generated from the to-be-updated parity Old Q and the to-be-updated data segment Old D2.

It is verified whether the updated parities New P and New Q are correct or not. If it is verified that both the updated parities New P and New Q are correct, the updated data segment New D2 is written to the memory system 3-3, the updated parity New P is written to the memory system 3-4, and the updated parity New Q is written to the memory system 3-5.

In the partial update of the data segment D2, the logical address ranges of the to-be-updated data segment Old D2 and the updated data segment New D2 are the same, but the data values in these data segments are different. Similarly, in the partial update of the data segment D0 or D1, the logical address ranges of the to-be-updated data segment Old D0 or Old D1 and the updated data segment New D0 or New D1 are the same, but the data values in these data segments are different.

### (Overview of Full Stripe Write)

Updating of the entire data of one stripe data (full stripe write) stored in all of the memory systems 3 constituting RAID-6 will be described. The data segments D0, D1, and D2 are updated.

When the data segments D0, D1, and D2 are updated, the parities P and Q are also updated. The to-be-updated parity Old P is represented by Equation 9 using the to-be-updated data segments Old D0, Old D1, and Old D2. $Old P = Old D 0 ⊕ Old D 1 ⊕ Old D 2$ Equation 9

The updated parity New P is represented by Equation 10 using the updated data segments New D0, New D1, and New D2. $New P = New D 0 ⊕ New D 1 ⊕ New D 2$ Equation 10

The to-be-updated parity Old Q is represented by Equation 11. $Old Q = g 0 ⋅ Old D 0 ⊕ g 1 ⋅ Old D 1 ⊕ g 2 ⋅ Old D 2$ Equation 11

The updated parity New Q is represented by Equation 12. $New Q = g 0 ⋅ New D 0 ⊕ g 1 ⋅ New D 1 ⊕ g 2 ⋅ New D 2$ Equation 12

Equation 12 for obtaining the updated parity New Q is transformed in the following manner. $\begin{matrix}New Q \\ = g 0 ⋅ New D 0 ⊕ g 1 ⋅ New D 1 ⊕ g 2 ⋅ New D 2 \\ = New Q " ⊕ g 2 ⋅ New D 2\end{matrix}$ Equation 13 $New Q " = g 0 ⋅ New D 0 ⊕ g 1 ⋅ New D 1$ Equation 14

In the full stripe write, Equation 10 for obtaining the updated parity New P is transformed in the following manner, similarly to Equation 13 and Equation 14. $\begin{matrix}New P \\ = New D 0 ⊕ New D 1 ⊕ New D 2 \\ = New P " ⊕ New D 2\end{matrix}$ Equation 15 $New P " = New D 0 ⊕ New D 1$ Equation 16

In the full stripe write, the updated parity New Q is generated using the intermediate data New Q", the updated data segment New D2, and the coefficient g2, as represented by Equation 13 and Equation 14. The intermediate data New Q" is calculated from the updated data segment New D0, the updated data segment New D1, and the coefficients g0 and g1.

In the full stripe write, the updated parity New P is generated using the intermediate data New P" and the updated data segment New D2, as represented by Equation 15 and Equation 16. The intermediate data New P" is calculated from the updated data segment New D0 and the updated data segment New D1.

In the full stripe write as well, it is verified whether the updated parities New P and New Q are correct or not. If it is verified that both the updated parities New P and New Q are correct, the updated data segment New D0 is written to the memory system 3-1, the updated data segment New D1 is written to the memory system 3-2, the updated data segment New D2 is written to the memory system 3-3, the updated parity New P is written to the memory system 3-4, and the updated parity New Q is written to the memory system 3-5.

The above description relates to verifying the updated parity when updating data, but the initial parity generated when writing data for the first time is also verified similarly. In the first data write, description of the full stripe write is applied since new data segments are written to the memory systems 3-1, 3-2, and 3-3.

### (Overview of parity verification)

In the partial update, the updated parity New Q is generated from the intermediate data New Q', the updated data segment New D2, and the coefficient g2, as represented by Equation 5. Therefore, the memory system 3-5 can rebuild the updated data segment New D2 from the updated parity New Q, the intermediate data New Q', and the coefficient g2, as rebuilt data segment Rebuild D2(Q), as represented by Equation 17. $\begin{matrix}Rebuild D 2 \left(Q\right) \\ = \left(New Q/g2\right) ⊕ \left(New Q′/g2\right)\end{matrix}$ Equation 17 where, "/" represents a division in Galois field.

The intermediate data New Q' is calculated from the to-be-updated parity Old Q, the to-be-updated data segment Old D2, and the coefficient g2, as represented by Equation 6.

If the rebuilt data segment Rebuild D2(Q), which is rebuilt from the updated parity New Q using Equation 17, matches the updated data segment New D2, it is determined that the updated parity New Q is correct.

In the partial update, the updated parity New P is generated from the intermediate data New P' and the updated data segment New D2, as represented by Equation 7. Therefore, the memory system 3-4 can rebuild the updated data segment New D2 from the updated parity New P and the intermediate data New P', as the rebuilt data segment Rebuild D2(P), as represented by Equation 18. $\begin{matrix}Rebuild D 2 \left(P\right) \\ = New P ⊕ New P ′\end{matrix}$ Equation 18

The intermediate data New P' is generated from the to-be-updated parity Old P and the to-be-updated data segment Old D2, as represented by Equation 8.

If the rebuilt data segment Rebuild D2(P), which is rebuilt from the updated parity New P using Equation 18, matches the updated data segment New D2, it is determined that the updated parity New P is correct.

The above description of the partial update is a description in a case where the data segment D2 is updated. In the partial update where the data segment D0 or D1 is updated, the memory system 3-5 can determine whether the updated parity New Q is correct or not, by rebuilding the updated data segment New D0 or New D1 as the rebuilt data segment Rebuild D0(Q) or Rebuild D1(Q) as represented by Equation 17 and comparing the rebuilt data segment Rebuild D0(Q) or Rebuild D1(Q) with the updated data segment New D0 or New D1. Similarly, the memory system 3-4 can determine whether the updated parity New P is correct or not, by rebuilding the updated data segment New D0 or New D1 as the rebuilt data segment Rebuild D0(P) or Rebuild D1(P) as represented by Equation 18 and comparing the rebuilt data segment Rebuild D0(P) or Rebuild D1(P) with the updated data segment New D0 or New D1.

In the full stripe write, the updated parity New Q is generated from the intermediate data New Q", the updated data segment New D2, and the coefficient g2, as represented by Equation 13. Therefore, the memory system 3-5 can rebuild the updated data segment New D2 from the updated parity New Q, the intermediate data New Q", and the coefficient g2, as rebuilt data segment Rebuild D2(Q), as represented by Equation 19. $\begin{matrix}Rebuild D 2 \left(Q\right) \\ = \left(New Q/g2\right) ⊕ \left(New Q"/g2\right)\end{matrix}$ Equation 19

The intermediate data New Q" is generated calculated from the updated data segments New D0 and New D1 and the coefficients g0 and g1, as represented by Equation 14.

If the rebuilt data segment Rebuild D2(Q), which is rebuilt from the updated parity New Q using Equation 17, matches the updated data segment New D2, it is determined that the updated parity New Q is correct.

In the full stripe write, the updated parity New P is generated from the intermediate data New P" and the updated data segment New D2, as represented by Equation 15. Therefore, the memory system 3-4 can rebuild the updated data segment D2 from the updated parity New P and the intermediate data New P", as the rebuilt data segment Rebuild D2(P), as represented by Equation 20. $\begin{matrix}Rebuild D 2 \left(P\right) \\ = New P ⊕ New P "\end{matrix}$ Equation 20

The intermediate data New P" is calculated from the updated data segments New D0 and New D1, as represented by Equation 16.

If the rebuilt data segment Rebuild D2(P), which is rebuilt from the updated parity New P, matches the updated data segment New D2, it is determined that the updated parity New P is correct.

In the full stripe write, the verification of the updated parity may be performed by rebuilding the data segment D0 or D1, rather than the data segment D2. In other words, the memory system 3-5 can determine whether the updated parity New Q is correct or not, by rebuilding the updated data segment New D0 or New D1 as the rebuilt data segment Rebuild D0(Q) or Rebuild D1(Q) as represented by Equation 19 and comparing the rebuilt data segment Rebuild D0(Q) or Rebuild D1(Q) with the updated data segment New D0 or New D1. Similarly, the memory system 3-4 can determine whether the updated parity New P is correct or not, by rebuilding the updated data segment New D0 or New D1 as the rebuilt data segment Rebuild D0(P) or Rebuild D1(P) as represented by Equation 20 and comparing the rebuilt data segment Rebuild D0(P) or Rebuild D1(P) with the updated data segment New D0 or New D1.

### (Processing of partial update)

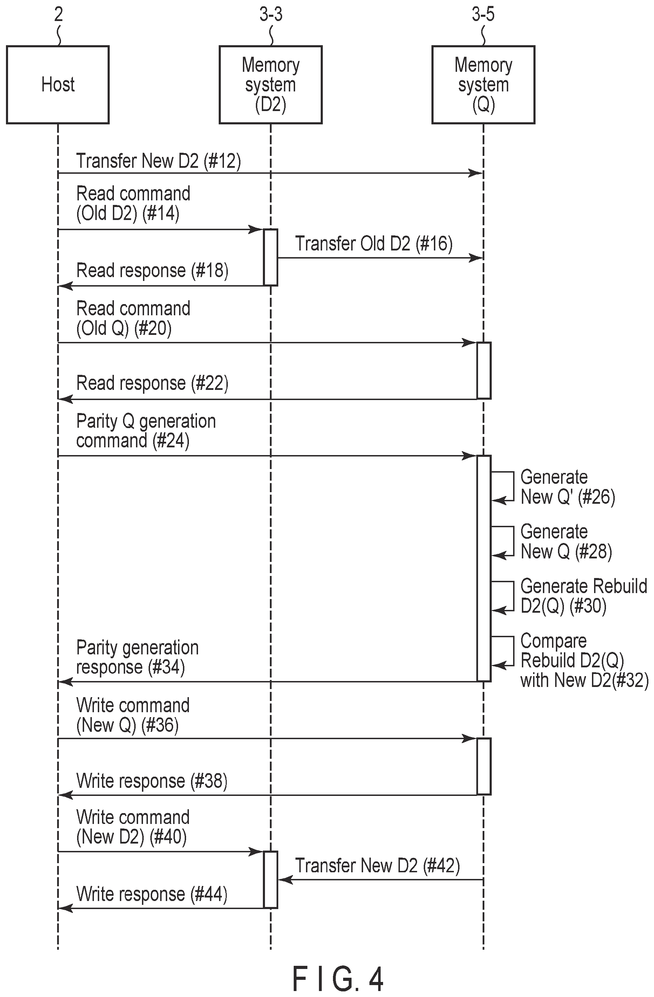

FIG. 4 is a flowchart illustrating a processing sequence of the partial update according to the embodiment. FIG. 4 shows an embodiment in which the data segment D2 stored in the memory system 3-3 is updated and the data segments D0 and D1 stored in the memory systems 3-1 and 3-2, respectively, are not updated. To simplify the description, the generation, verification and updating of the parity P are omitted in FIG. 4.

When updating the data segment D2, the host 2 transfers the updated data segment New D2 to the memory system 3-5 to store the data segment New D2 in the DRAM 6 (step #12).

The host 2 transfers a read command to read the to-be-updated data segment Old D2, to the memory system 3-3 (#14). This read command includes an instruction to transfer the read to-be-updated data segment Old D2 to the memory system 3-5.

The read controller 142 of the memory system 3-3 reads the to-be-updated data segment Old D2 from the NAND flash memory 5. The command controller 141 of the memory system 3-3 transfers the to-be-updated data segment Old D2 to the memory system 3-5 to store the data segment Old D2 in the DRAM 6 of the memory system 3-5 (step #16). The command controller 141 of the memory system 3-3 transfers a read response indicative of completion of the reading to the host 2 (#18).

The host 2 transfers a read command to read the to-be-updated parity Old Q, to the memory system 3-5 (#20). This read command includes an instruction to store the read to-be-updated parity Old Q in the DRAM 6.

The read controller 142 of the memory system 3-5 reads the to-be-updated parity Old Q from the NAND flash memory 5. The read controller 142 of the memory system 3-5 stores the read to-be-updated parity Old Q in the DRAM 6. The command controller 141 of the memory system 3-5 transfers a read response indicative of completion of the reading to the host 2 (#22).

The host 2 transfers a parity Q generation command to the memory system 3-5 (#24). The parity Q generation command specifies the coefficients g0, g1, and g2.

The XOR calculator 143 of the memory system 3-5 calculates the intermediate data New Q' for generation of the updated parity New Q, based on Equation 6, using the to-be-updated parity Old Q, the to-be-updated data segment Old D2, and the coefficient g2 (#26).

The XOR calculator 143 of the memory system 3-5 calculates the updated parity New Q, based on Equation 5, using the intermediate data New Q', the updated data segment New D2, and the coefficient g2 (#28).

The XOR calculator 143 of the memory system 3-5 calculates the rebuilt data segment Rebuild D2(Q), based on Equation 17, using the updated parity New Q, the intermediate data New Q', and the coefficient g2 (#30).

The command controller 141 of the memory system 3-5 compares the calculated rebuilt data segment Rebuild D2(Q) with the updated data segment New D2 (#32). If both of them match, the command controller 141 of the memory system 3-5 determines that the generation of the parity Q is successful. If both of them do not match, the command controller 141 of the memory system 3-5 determines that the generation of the parity Q fails.

The command controller 141 of the memory system 3-5 transfers a parity generation response indicative of success or failure in generation of the parity Q, to the host 2 (#34). If receiving a response indicative of failure in generation of the parity Q, the host 2 may retransfer the parity Q generation command to the memory system 3-5 again, notify the user of an error, or stop writing to the memory system 3-3.

If receiving a response indicative of success in generation of the parity Q, the host 2 transfers a write command to write the updated parity New Q, to the memory system 3-5 (#36). The write controller 144 of the memory system 3-5 writes the updated parity New Q to the NAND flash memory 5.

The command controller 141 of the memory system 3-5 transfers a write response indicative of completion of the writing to the host 2 (#38).

The host 2 transfers a write command to write the updated data segment New D2, to the memory system 3-3 (#40). This write command includes an instruction to receive the updated data segment New D2 from the memory system 3-5. The command controller 141 of the memory system 3-3 reads the updated data segment New D2 stored in the DRAM 6 of the memory system 3-5. The updated data segment New D2 is transferred from the memory system 3-5 to the memory system 3-3 (#42). The write controller 144 of the memory system 3-3 writes the updated data segment New D2 to the NAND flash memory 5. Alternatively, the host 2 may transfer the updated data segment New D2 to the memory system 3-3 along with the write command (#40) for writing the updated data segment New D2. In this case, reading the updated data segment New D2 from the memory system 3-5 and transfer of the updated data segment New D2 to the memory system 3-3 (#42) is unnecessary.

The command controller 141 of the memory system 3-3 transfers a write response indicative of completion of the writing to the host 2 (#44).

The host 2 transfers, verifies, and updates the parity generation command to the memory system 3-4 for the parity P in the same manner as the parity Q.

### (Processing of full stripe write)

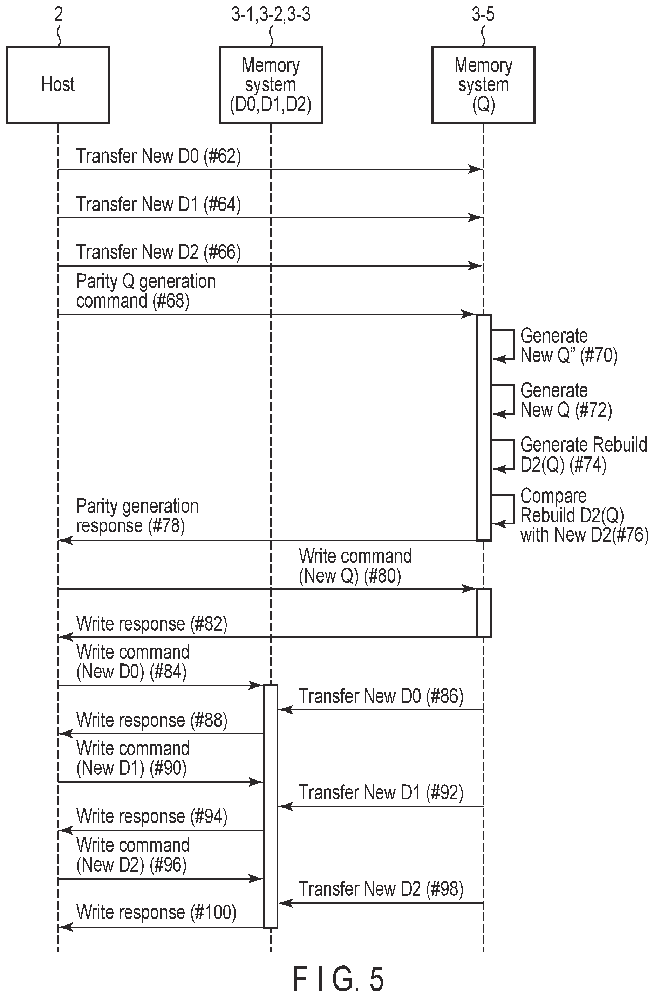

FIG. 5 is a flowchart illustrating a processing sequence of the full stripe write. FIG. 5 shows an embodiment of updating the data segments D0, D1, and D2 respectively stored in the memory systems 3-1, 3-2, and 3-3 which constitute the stripe data. To simplify the description, the generation, verification and updating of the parity P are omitted in FIG. 5.

When the data segments D0, D1, and D2 are updated, the host 2 transfers the updated data segments New D0, New D1, and New D2 to the memory system 3-5 to store the data segments New D0, New D1, and New D2 in the DRAM 6 of the memory system 3-5 (steps #62, #64, and #66).

The host 2 transfers a parity Q generation command to the memory system 3-5 (#68). The parity Q generation command specifies the coefficients g0, g1, and g2.

The XOR calculator 143 of the memory system 3-5 calculates the intermediate data New Q" for generation of the updated parity New Q, based on Equation 14, using the updated data segments New D0 and New D1, and the coefficients g0 and g1 (#70).

The XOR calculator 143 of the memory system 3-5 calculates the updated parity New Q, based on Equation 13, using the intermediate data New Q", the updated data segment New D2, and the coefficient g2 (#72).

The XOR calculator 143 of the memory system 3-5 calculates the rebuilt data segment Rebuild D2(Q), based on Equation 19, using the updated parity New Q, the intermediate data New Q", and the coefficient g2 (#74).

The command controller 141 of the memory system 3-5 compares the calculated rebuilt data segment Rebuild D2(Q) with the updated data segment New D2 (#76). If both of them match, the command controller 141 of the memory system 3-5 determines that the generation of the parity Q is successful. If both of them do not match, the command controller 141 of the memory system 3-5 determines that the generation of the parity Q fails.

The command controller 141 of the memory system 3-5 transfers a parity generation response indicative of success or failure in generation of the parity Q, to the host 2 (#78). If receiving a response indicative of failure in generation of the parity Q, the host 2 may retransfer the parity generation command to the memory system 3-5 again, notify the user of an error, or stop writing to the memory systems 3-1, 3-2, and 3-3.

If receiving a response indicative of success in generation of the parity Q, the host 2 transfers a write command to write the updated parity New Q, to the memory system 3-5 (#80). The write controller 144 of the memory system 3-5 writes the updated parity New Q to the NAND flash memory 5.

The command controller 141 of the memory system 3-5 transfers a write response indicative of completion of the writing to the host 2 (#82).

The host 2 transfers write commands to write the updated data segments New D0, New D1, and New D2, to the memory systems 3-1, 3-2, and 3-3, respectively (#84, #90, and #96). These write commands include instructions to receive the respective updated data segments New D0, New D1, and New D2 from the memory system 3-5. The command controllers 141 of the memory systems 3-1, 3-2, and 3-3 read the updated data segments New D0, New D1, and New D2 stored in the DRAM 6 of the memory system 3-5, respectively. The updated data segments New D0, New D1, and New D2 are transferred from the memory system 3-5 to the memory systems 3-1, 3-2, and 3-3, respectively (#86, #92, and #98). The write controllers 144 of the memory systems 3-1, 3-2, and 3-3 write the updated data segments New D0, New D1, and New D2 to the NAND flash memories 5, respectively. Alternatively, the host 2 may transfer the updated data segments New D0, New D1, and New D2 to the memory systems 3-1, 3-2, and 3-3 along with the write commands (#84, #90, and #96) for writing the updated data segments New D0, New D1, and New D2, respectively. In this case, reading the updated data segments New D0, New D1, and New D2 from the memory system 3-5 and respective transfers of the updated data segment New D0, New D1, and New D2 to the memory systems 3-1, 3-2, and 3-3 (#86, #92, and #98) are unnecessary.

The command controllers 141 of the memory systems 3-1, 3-2, and 3-3 transfer write responses indicative of completion of the writing to the host 2 (#88, #94, and #100).

The host 2 transfers, verifies, and updates the generation command to the memory system 3-4 for the parity P in the same manner as the parity Q.

The embodiment in which the three updated data segments are updated sequentially in chronological order has been described in FIG. 5, but is not limited to this, and the three updated data segments may be updated simultaneously in parallel.

The embodiment that the plurality of memory systems 3 constitute RAID-6 has been described above, but the plurality of memory systems 3 may constitute RAID-5 in the same manner. RAID-5 includes the memory systems 3-1, 3-2, and 3-3 for storage of data and the memory system 3-4 for storage of the parity P.

According to at least one embodiment described above, the memory system can verify whether the generated parity is correct or not. Therefore, the reliability of the information processing system configured to include the memory system according to the embodiment can be improved.

According to embodiments, memory systems and methods of operating memory systems are provided in accordance with the following numbered clauses.

Clause (1) A memory system comprising:
an interface circuit (11) communicable with a host (2) and a plurality of external memory systems (3-1, 3-2, 3-3, 3-4, 3-5), the plurality of external memory systems (3-1, 3-2, 3-3, 3-4, 3-5) including at least a first memory system (3-3) and a second memory system (3-2);
a nonvolatile memory (5); and
a controller (14) configured to:
   generate a first parity (Old Q), based on first data (Old D2) stored in the first memory system (3-3) and second data (Old D1) stored in the second memory system (3-2);
   write the first parity (Old Q) to the nonvolatile memory (5);
   receive third data (New D2) from the host (2) via the interface circuit (11), the third data (New D2) being updated data of the first data (Old D2);
   receive the first data (Old D2) from the first memory system (3-3) via the interface circuit (11);
   read the first parity (Old Q) from the nonvolatile memory (5);
   generate a second parity (New Q), based on the first parity (Old Q), the first data (Old D2), and the third data (New D2);
   generate first rebuilt data (Rebuild D2(Q)), based on the second parity (New Q), the first parity (Old Q), and the first data (Old D2); and
   compare the first rebuilt data (Rebuild D2(Q)) with the third data (New D2) received from the host.

Clause (2) The memory system according to Clause (1), wherein
the controller (14) is further configured to write the second parity (New Q) to the nonvolatile memory (5) if the first rebuilt data (Rebuild D2(Q)) matches the third data (New D2) received from the host (2).

Clause (3) The memory system according to Clause (2), wherein
the controller (14) is further configured to:
transfer a first response indicative of success in generation of the second parity (New Q) to the host (2) via the interface circuit (11) if the first rebuilt data (Rebuild D2(Q)) matches the third data (New D2) received from the host (2); and
transfer a second response indicative of failure in generation of the second parity (New Q) to the host (2) via the interface circuit (11) if the first rebuilt data (Rebuild D2(Q)) does not match the third data (New D2) received from the host (2).

Clause (4) The memory system according to any of Clauses (1) to (3), wherein
the controller (14) is further configured to generate the first parity (Old Q) by calculating exclusive OR of the first data (Old D2) and the second data (Old D1).

Clause (5) The memory system according to Clause (4), wherein
the controller (14) is further configured to generate the second parity (New Q) by calculating exclusive OR of the first parity (Old Q), the first data (Old D2), and the third data (New D2).

Clause (6) The memory system according to any of Clauses (1) to (5), wherein
the controller (14) is further configured to:
receive fourth data (New D1) from the host (2) via the interface circuit (11), the fourth data (New D1) being updated data of the second data (Old D1);
generate a third parity (New Q), based on the third data (New D2) and the fourth data (New D1);
generate second rebuilt data (Rebuild D2(Q)), based on the third parity (New Q) and the fourth data (New D1); and
compare the second rebuilt data (Rebuild D2(Q)) with the third data (New D2) received from the host (2).

Clause (7) The memory system according to Clause (6), wherein
the controller (14) is further configured to write the third parity (New Q) to the nonvolatile memory (5) if the second rebuilt data (Rebuild D2(Q)) matches the third data (New D2) received from the host (2).

Clause (8) The memory system according to Clause (7), wherein
the controller (14) is further configured to:
transfer a third response indicative of success in generation of the third parity (New Q) to the host (2) via the interface circuit (11) if the second rebuilt data (Rebuild D2(Q)) matches the third data (New D2) received from the host (2); and
transfer a fourth response indicative of failure in generation of the third parity (New Q) to the host (2) via the interface circuit (11) if the second rebuilt data (Rebuild D2(Q)) does not match the third data (New D2) received from the host (2).

Clause (9) The memory system according to any of Clauses (1) to (8), wherein
the controller (14) is further configured to:
receive the first data (Old D2) from the host (2) via the interface circuit (11);
receive the second data (Old D1) from the host (2) via the interface circuit (11);
generate the first parity (Old Q), based on the first data (Old D2) and the second data (Old D1);
generate third rebuilt data (Rebuild D2(Q)), based on the first parity (Old Q) and the second data (Old D1); and
compare the third rebuilt data (Rebuild D2(Q)) with the first data (Old D2) received from the host (2).

Clause (10) The memory system according to any of Clauses (1) to (9), wherein
the controller (14) is further configured to transfer the third data (New D2) received from the host (2), to the first memory system (3-3) via the interface circuit (11).

Clause (11) A method of operating a plurality of memory systems (3-1, 3-2, 3-3, 3-4, 3-5) each including a nonvolatile memory (5) and a controller (7) electrically connected to the nonvolatile memory (5), the plurality of memory systems including at least a first memory system (3-3), a second memory system (3-2), and a third memory system (3-5), the method comprising:
by a first controller (14) that is the controller of the first memory system (3-3), storing first data (Old D2) in a first nonvolatile memory (5) that is the nonvolatile memory of the first memory system (3-3);
by a second controller (14) that is the controller of the second memory system (3-2), storing second data (Old D1) in a second nonvolatile memory (5) that is the nonvolatile memory of the second memory system (3-2);
by a third controller (14) that is the controller of the third memory system (3-5),
   generating a first parity (Old Q), based on the first data (Old D2) and the second data (Old D1);
   storing the first parity (Old Q) in a third nonvolatile memory (5) that is the nonvolatile memory of the third memory system (3-5);
   receiving third data (New D2) from a host (2), the third data (New D2) being updated data of the first data (Old D2);
   receiving the first data (Old D2) from the first controller (14);
   reading the first parity (Old Q) from the third nonvolatile memory (5);
   generating a second parity (New Q), based on the first parity (Old Q), the first data (Old D2), and the third data (New D2);
   generating first rebuilt data (Rebuild D2(Q)), based on the second parity (New Q), the first parity (Old Q), and the first data (Old D2); and
   comparing the first rebuilt data (Rebuild D2(Q)) with the third data (New D2) received from the host (2).

Clause (12) The method according to Clause (11), further comprising:
by the third controller (14),
transferring a first response indicative of success in generation of the second parity (New Q) to the host if the first rebuilt data (Rebuild D2(Q)) matches the third data (New D2) received from the host (2); and
writing the second parity (New Q) to the third nonvolatile memory (5) in response to receiving a first write command.

Clause (13) The method according to Clause (11) or 12, further comprising:
by the third controller (14),
generating the first parity (Old Q) by calculating exclusive OR of the first data (Old D2) and the second data (Old D1); and
generating the second parity (New Q) by calculating exclusive OR of the first parity (Old Q), the first data (Old D2), and the third data (New D2).

Clause (14) The method according to any of Clauses (11) to (13), further comprising:
by the third controller (14),
receiving fourth data (New D1) from the host (2), the fourth data being updated data of the second data (Old D1);
generating a third parity (New Q), based on the third data (New D2) and the fourth data (New D1);
generating second rebuilt data (Rebuild D2(Q)), based on the third parity (New Q) and the fourth data (New D1); and
comparing the second rebuilt data (Rebuild D2(Q)) with the third data (New D2) received from the host.

Clause (15) The method according to any of Clauses (11) to (14), wherein
the plurality of memory systems further include a fourth memory system (3-4), and the method further comprises:
by a fourth controller (14) that is the controller of the fourth memory system (3-4),
generating a fourth parity (Old P), based on the first data (Old D2) and the second data (Old D1);
storing the fourth parity (Old P) in a fourth nonvolatile memory (5) that is the nonvolatile memory of the fourth memory system;
receiving the third data (New D2) from the host (2);
receiving the first data (Old D2) from the first controller (14);
generating a fifth parity (New P), based on the fourth parity (Old P), the first data (Old D2), and the third data (New D2);
generating fourth rebuilt data (Rebuild D2(P)), based on the fifth parity (New P1), the fourth parity (Old P), and the first data (Old D2); and
comparing the fourth rebuilt data (Rebuild D2(P)) with the third data (New D2) received from the host (2).

While certain embodiments have been described, these embodiments have been presented by way of example only, and are not intended to limit the scope of the inventions. Indeed, the novel devices and methods described herein may be embodied in a variety of other forms; furthermore, various omissions, substitutions and changes in the form of the embodiments described herein may be made without departing from the scope of the inventions.

## Claims

1. A storage system connectable with a host (2), comprising:
a plurality of memory systems (3) each including a nonvolatile memory (5) and a controller (7) electrically connected to the nonvolatile memory (5), the plurality of memory systems (3) including at least a first memory system (3-3), a second memory system (3-2), and a third memory system (3-5);
a first controller (7) that is the controller (7) of the first memory system (3-3) is configured to store first data (Old D2) in a first nonvolatile memory (5) that is the nonvolatile memory (5) of the first memory system (3-3);
a second controller (7) that is the controller (7) of the second memory system (3-2) is configured to store second data (Old D1) in a second nonvolatile memory (5) that is the nonvolatile memory (5) of the second memory system (3-2);
a third controller (7) that is the controller (7) of the third memory system (3-5) is configured to:
generate a first parity (Old Q), based on the first data (Old D2) and the second data (Old D1);
store the first parity (Old Q) in a third nonvolatile memory (5) that is the nonvolatile memory (5) of the third memory system (3-5);
receive third data (New D2) from the host (2), the third data (New D2) being updated data of the first data (Old D2);
receive the first data (Old D2) from the first controller (7, 3-3);
read the first parity (Old Q) from the third nonvolatile memory (5, 3-5);
generate a second parity (New Q), based on the first parity (Old Q), the first data (Old D2), and the third data (New D2);
generate first rebuilt data (Rebuild D2(Q)), based on the second parity (New Q), the first parity (Old Q), and the first data (Old D2); and
compare the first rebuilt data (Rebuild D2(Q)) with the third data (New D2) received from the host (2).

2. The storage system of claim 1, wherein
the third controller (7, 3-5) is further configured to transfer a first response indicative of success in generation of the second parity (New Q) to the host (2) if the first rebuilt data (Rebuild D2(Q)) matches the third data (New D2) received from the host (2);
the host (2) is further configured to transfer a first write command requesting to write the second parity (New Q) to the third memory system (3-5), in response to receiving the first response; and
the third controller (7, 3-5) is further configured to write the second parity (New Q) to the third nonvolatile memory (5, 3-5) in response to receiving the first write command.

3. The storage system of claim 1, wherein
the third controller (7, 3-5) is further configured to transfer a second response indicative of failure in generation of the second parity (New Q) to the host (2) if the first rebuilt data (Rebuild D2(Q)) does not match the third data (New D2) received from the host (2).

4. The storage system of any one of claims 1 to 3, wherein
the third controller (7, 3-5) is further configured to:
generate the first parity (Old Q) by calculating exclusive OR of the first data (Old D2) and the second data (Old D1); and
generate the second parity (New Q) by calculating exclusive OR of the first parity (Old Q), the first data (Old D2), and the third data (New D2).

5. The storage system of any one of claims 1 to 4, wherein
the third controller (7, 3-5) is further configured to:
receive fourth data (New D1) from the host (2), the fourth data (New D1) being updated data of the second data (Old D1);
generate a third parity (New Q), based on the third data (New D2) and the fourth data (New D1);
generate second rebuilt data (Rebuild D2(Q)), based on the third parity (New Q) and the fourth data (New D1); and
compare the second rebuilt data (Rebuild D2(Q)) with the third data (New D2) received from the host (2).

6. The storage system of claim 5, wherein
the third controller (7, 3-5) is further configured to transfer a third response indicative of success in generation of the third parity (New Q) to the host (2) if the second rebuilt data (Rebuild D2(Q)) matches the third data (New D2) received from the host (2);
the host (2) is further configured to transfer a second write command requesting to write the third parity (New Q) to the third memory system (3-5), in response to receiving the third response; and
the third controller (7, 3-5) is further configured to write the third parity (New Q) to the third nonvolatile memory (5, 3-5) in response to receiving the second write command.

7. The storage system of any one of claims 1 to 6, wherein
the third controller (7, 3-5) is further configured to:
receive the first data (Old D2) from the host (2);
receive the second data (Old D1) from the host (2);
generate the first parity (Old Q), based on the first data (Old D2) and the second data (Old D1);
generate third rebuilt data (Rebuild D2(Q)), based on the first parity (Old Q) and the second data (Old D1); and
compare the third rebuilt data (Rebuild D2(Q)) with the first data (Old D2) received from the host (2).

8. The storage system of any one of claims 1 to 7, wherein
the third controller (7, 3-5) is further configured to transfer the third data (New D2) received from the host (2), to the first controller (7, 3-3).

9. The storage system of any one of claims 1 to 8, wherein
the plurality of memory systems (3) further include a fourth memory system (3-4), and
a fourth controller (7) that is the controller (7) of the fourth memory system (3-4) is configured to:
generate a fourth parity (Old P), based on the first data (Old D2) and the second data (Old D1);
store the fourth parity (Old P) in a fourth nonvolatile memory (5) that is the nonvolatile memory (5) of the fourth memory system (3-4);
receive the third data (New D2) from the host (2);
receive the first data (Old D2) from the first controller (7, 3-3);
read the fourth parity (Old P) from the fourth nonvolatile memory (5, 3-4);
generate a fifth parity (New P), based on the fourth parity (Old P), the first data (Old D2), and the third data (New D2);
generate fourth rebuilt data (Rebuild D2(P)), based on the fifth parity (New P), the fourth parity (Old P), and the first data (Old D2); and
compare the fourth rebuilt data (Rebuild D2(P)) with the third data (New D2) received from the host (2).

10. The storage system of claim 9, wherein
the fourth controller (7, 3-4) is configured to:
generate the fourth parity (Old P) by calculating exclusive OR of the first data (Old D2) and the second data (Old D1); and
generate the fifth parity (New P) by calculating exclusive OR of the fourth parity (Old P), the first data (Old D2), and the third data (New D2).

11. The storage system of claim 9 or 10,
wherein the fourth controller (7, 3-4) is configured to write the fifth parity (New P) to the fourth nonvolatile memory (5, 3-4) only when the fourth rebuilt data (Rebuild D2(P)) matches the third data (New D2).

12. The storage system of any one of claims 2, 4 to 11, wherein
the second parity (New Q) is written to the third nonvolatile memory (5, 3-5) only after completion of the comparison between the first rebuilt data (Rebuild D2(Q)) and the third data (New D2).

13. The storage system of any one of claims 5 to 12, wherein
the third parity (New Q) is generated using intermediate data (New Q") generated from the fourth data (New D1) and a further updated data segment (New D0).

14. The storage system of any one of claims 1 to 13, wherein
the third controller (7, 3-5) includes:
a command controller (141);
an XOR calculator (143); and
a write controller (144).

15. The storage system according to any one of claims 1 to 14, wherein
at least one comparison by the third controller (7, 3-5) is performed by the command controller (141).
